# EUROPEAN PATENT APPLICATION

(11) **EP 0 732 364 A1**
(43) Date of publication of application: **18.09.1996**
(21) Application number: 96102490.8
(22) Date of filing: 20.02.1996
(51) Int. Cl.: C08L 25/02, C08K 13/02

(54) **Self-extinguishing polymeric compositions**

(30) Priority: 16.03.1995 IT MI950507
(71) Applicant: ENICHEM S.p.A., I-20124 Milano (IT)
(72) Inventor: Roma, Pierpaolo,, Ferrara (IT)
(74) Representative: Gennari, Marco

(57) **Abstract**

Self-extinguishing polymeric compositions comprising:
a) at least one vinylaromatic (co)polymer;
b) from 0.1 to 5 parts by weight, with respect to 100 parts of component (a), of a fluorinated or perfluorinated polyolefin;
c) from 2 to 15 parts by weight, with respect to 100 parts of component (a), of at least one antimonium oxide;
d) from 6 to 30 parts by weight, with respect to 100 parts of component (a), of a halogenated flame-retardant additive having general formula (I): 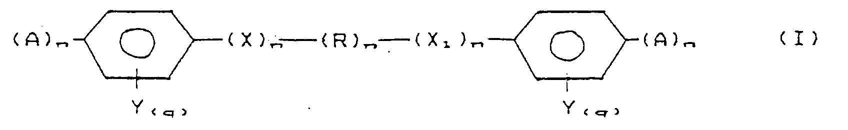 possibly mixed with a chlorinated polyolefin.

## Description

The present invention relates to self-extinguishing polymeric compositions.

More specifically, the present invention relates to polymeric compositions having self-extinguishing characteristics based on vinylaromatic (co)polymers.

The preparation of plasto-elastomeric compositions of the vinylaromatic type is well known, for example ABS (acrylonitrile-butadiene-styrene) polymers, by mixing grafted polymeric products, in this case polymers of styrene and acrylonitrile polymerized on polybutadiene rubbers, with thermoplastic resins consisting of styrene and acrylonitrile copolymers known as SAN (styrene-acrylonitrile) resins.

These compositions can be applied in numerous technological fields owing to their excellent combination of mechanical, physico-chemical and thermal properties. One of the disadvantages of these compositions, however, is that they burn very easily spreading the flame, and consequently they do not pass the inflammability test, such as the vertical UL 94 V method (Underwriters Laboratory Bulletin 94).

This disadvantage considerably limits the fields of application of these compositions. In order to reduce or inhibit the flammability of these compositions, the usual technique is to add, at the end of the polymerization process, certain additives, generally known as flame-retardant agents, in the mixing phase which the production of ABS polymers involves.

Halogenated compounds and in particular brominated compounds such as decabromodiphenyl and decabromodiphenylether, polytribromostyrene, bis-tribromophenoxyethane, pentabromoethylbenzene, octabromodiphenyl, octabromodiphenylether, etc., are generally used for this purpose.

In the case of certain vinylaromatic (co)polymers, such as for example ABS, the V-O classification in the UL 94 test is reached either by the combined action of antimonium oxide and a halogenated compound or by the use of high quantities of halogenated compound.

In general, the quantities of halogens used are preferably the lowest possible to reduce certain drawbacks such as, for example, corrosion of the metallic parts, development of toxic fumes, etc. In addition, high quantities of halogen can have a harmful effect on the properties of the polymeric compositions to which they are added. In fact, a substantial decrease in the impact-strength, elongation, as well as the processability and stability to processing and finally a considerable increase in the specific weight, can be observed in vinylaromatic (co)polymers to which high concentrations of flame-retardant agents containing halogens have been added.

The Applicant has now found, and this is the object of the present invention, that it is possible to obtain a self-extinguishing polymeric composition based on vinylaromatic (co)polymers containing a reduced quantity of flame-retardant agents, by the addition of fluorinated organic products to the polymeric mixture.

These fluorinated products, preferably having a high molecular weight, are added to the polymeric composition in quantities which are not high but sufficient to considerably reduce the quantity of conventional flame-retardants and without jeopardizing the physico-mechanical characteristics of the (co)polymers themselves.

The present invention therefore relates to self-extinguishing polymeric compositions comprising:
a) at least one vinylaromatic (co)polymer;
b) from 0.1 to 5 parts by weight, with respect to 100 parts of component (a), of a fluorinated or perfluorinated polyolefin;
c) from 2 to 15 parts by weight, with respect to 100 parts of component (a), of at least one antimonium oxide;
d) from 6 to 30 parts by weight, with respect to 100 parts of component (a), of a halogenated flame-retardant additive having general formula (I): 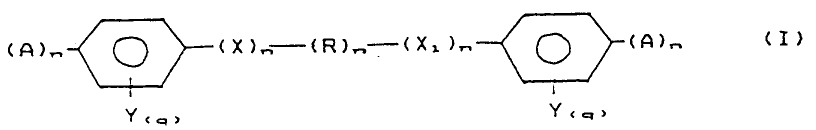 wherein R represents a C₁-C₆ alkylenic or cycloalkylenic radical or C₆-C₁₂ arylenic radical; X and X₁, the same or different, represent a C₁-C₄ alkylenic radical; C₆-C₁₂ arylenic radical, -O-, -S- or -NH-; A represents an -OH group, a C₁-C₄ alkylic or alkoxylic group possibly substituted with halogens; Y is a halogen such as bromine; n is zero or 1; q is an integer between 1 and 5;
   possibly mixed with a chlorinated polyolefin.

The term vinylaromatic (co)polymer as used in the present invention or claims refers to homopolymers or copolymers, possibly impact-resistant, obtained by the polymerization of a mixture of monomers containing at least 50% by weight of one or more aromatic compounds having formula (II): 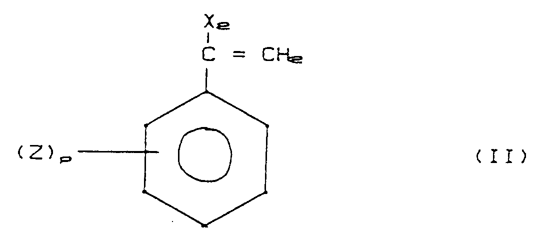 wherein X₂ represents hydrogen or an alkylic radical having from 1 to 4 carbon atoms; p is zero or an integer between 1 and 5; and Z represents a halogen or an alkylic radical having from 1 to 4 carbon atoms.

Examples of vinylaromatic monomers having formula (II) are: styrene, mono-, di-, tri-, tetra- and pentachlorostyrene and the corresponding alphamethylstyrenes; styrenes alkylated in the nucleus and the corresponding alphamethylstyrenes; ortho-, meta- and paramethylstyrene; ortho- and paramethyl-alphamethylstyrene, etc. Styrene is the preferred vinylaromatic monomer.

The vinylaromatic monomers can be used alone, mixed with each other or with other copolymerizable monomers such as maleic anhydride or acrylic or methacrylic monomers.

Acrylic monomer means firstly and preferably acrylonitrile. Other acrylic or methacrylic monomers are methacrylonitrile, acrylic or methacrylic acid and their alkylesters containing from 1 to 8 carbon atoms in the alkylic radical.

Impact-resistant vinylaromatic (co)polymer refers to any polymer consisting of at least 50% by weight of one or more compounds having general formula (II) and containing an elastomeric phase dispersed in the polymeric matrix.

The elastomeric phase can be a diene rubber, such as polybutadiene, high and medium cis polybutadiene with a low viscosity, polyisoprene, the copolymers of butadiene and/or isoprene with styrene, or an olefine rubber such as ethylene-propylene copolymers (EPM) or ethylene-propylene-diene terpolymers (EPDM).

The content of elastomeric phase in the impact-resistant vinylaromatic (co)polymer is between 0.1 and 20% by weight, preferably between 4 and 15% by weight.

Examples of vinylaromatic (co)polymers which can be used in the present invention are: polystyrene, impact-resistant polystyrene, SAN resins, ABS resins, etc.

These vinylaromatic (co)polymers, particularly those reinforced with rubber, can be prepared with various polymerization processes, which can be in continuous or batch, in emulsion, in mass, in solution or with a combined mass/suspension process.

The polymerization process in mass and in continuous, possibly in the presence of a solvent, is known and described in literature, for example, in U.S. patents 2.694.692, 3.243.481 and 3.658.946 and in published European patent application 400.479. Polymerization processes in emulsion are, on the other hand, described, for example, in U.S. patents 1.948.703, 3.160.613, 3.068.192, 3.201.375, 2.437.202, 2.652.384, 3.170.964 or in English patents 649.166 and 919.381, etc.

Copolymers which are particularly preferred in the present invention are ABS resins consisting of:
A) 5-97% by weight of a graft polymer obtained by the graft copolymerization of:
   i) from 10 to 90% by weight of a mixture of acrylonitrile and styrene containing from 50 to 90% by weight of styrene;
   ii) from 90 to 10% by weight of polybutadiene;
B) from 10 to 90% by weight of:
   iii) a thermoplastic copolymer of acrylonitrile with styrene and/or alpha-methylstyrene, containing from 50 to 5% by weight of acrylonitrile; or
   iv) a thermoplastic terpolymer of acrylonitrile with styrene and/or alpha-methylstyrene and a third monomer selected from methylmethacrylate and maleic anhydride, containing from 50 to 5% by weight of acrylonitrile and from 50 to 95% by weight of styrene and/or alpha-methylstyrene;
   v) mixtures of the copolymer (iii) with the terpolymer (iv).

The above ABS resins can also contain a rubber which is different from polybutadiene provided it is characterized by a glass transition temperature of less than 10°C or mixtures of these rubbers with polybutadiene.

In the preferred ABS resins of the present invention the graft copolymer (A) can be prepared with the known method, by polymerizing the monomers (styrene and acrylonitrile) in a water latex of polybutadiene in the weight percentages defined above, in the presence of catalysts (such as peroxides, hydroperoxides, etc.) and the usual quantities and types of emulsifying agents, pH regulators, etc.

The thermoplastic copolymer [B(iii)] or thermoplastic terpolymer [B(iv)] can also be prepared with the known method, by polymerizing the monomers in an water emulsion, in suspension or in mass in the reciprocal ratios defined above, in the presence of analogous quantities and types of catalysts, emulsifying agents, etc., used to prepare the graft copolymer (A). The polymerization temperature, for the preparation of both the copolymers (A) and copolymers (B) is selected according to the type of process used.

The composition (A)+(B), consisting of the preferred ABS resin in the present invention, can be prepared with any conventional mixing method. Generally, the mixing is carried out in the molten state, in known mixing devices, such as single- and twin-screw extruders, Banbury-type internal mixers, heating rollers, etc., at a temperature of between 170°C and 250°C.

The fluorinated or perfluorinated polyolefin used in the compositions of the present invention basically consists of polytetrafluoroethylene, the copolymer tetrafluoroethylene/perfluoropropylene, polyperfluoroalkylvinylethers, the copolymer trifluorochloroethylene/ethylene, the terpolymer vinylidenefluoride (50% by weight), hexafluoropropene (25%), tetrafluoroethylene (25%), etc.

The preferred antimonium oxides of the present invention are antimonium trioxide and antimonium sesquioxide.

The halogenated flame-retardant additive having general formula (I) is a product which is known in literature and described, for example, in U.S. patent 3.883.479.

The halogenated flame-retardant additives having general formula (I) can be combined with a chlorinated polyolefin such as, for example, chloropolyethylene containing about 35% by weight of chlorine. The content of chlorinated polyolefin is, generally, less than 30% by weight with respect to the sum of the two halogenated additives.

The compositions of the present invention, like the composition (A)+(B) described above, can be prepared with any conventional mixing method. Generally, the mixing is carried out in the molten state, after pre-mixing at room temperature, in known mixing devices, such as single- and twin-screw extruders, Banbury-type internal mixers, heating rollers, etc., at a temperature of between 170°C and 250°C.

The present compositions can also contain other additives closely incorporated, such as stabilizers, antiacid agents, plasticizers, lubricants, flowing agents, dyes, pigments, glass fibres or other inorganic fillers, etc. to give particular characteristics to the material.

The compositions of the present invention are easily processable and have a combination of properties which make them suitable for use in the preparation of articles having good impact-strength together with good thermoresistance. These mixtures are therefore applied in the fields of household appliances, electronics, data-processing and technical items generally in the form of sheets, strips, tapes, rods, boxes, hoods, containers, etc.

Some illustrative but not limiting examples are given below to provide a better understanding of the present invention and for its embodiment.

In the examples all the parts and percentages are given by weight unless otherwise indicated. In the examples, for the measurement of the characteristics of the mixtures of the present invention, the following methods were used:

### Flame-retardant properties:

The inflammability was determined according to the vertical method of the "Underwriter's Laboratory" called UL 94 V described in "Standard for test for flammability of plastic materials for parts in devices and appliances" 3° edition, 20 January 1980, on test samples having dimensions of 127 x 12.7 x 1.59 mm (5"x0.5"x0.625").

The inflammability was determined according to the Oxygen Index method (L.O.I.) according to ASTM D2863 called "Candle Test", on test samples of 130x6.5x3 mm.

### Physical properties:

The Specific Weight was determined in a "gradient" column according to ASTM D792.

### Mechanical properties:

The IZOD resistance with notch was determined at 23°C (RCI 23°C PI), according to ASTM D256, on test samples having a thickness of 6.4 and 3.2 mm.

The flexural Elastic Modulus was determined (M.E.F.) according to ASTM D790 method 1 (with three points) on test samples having dimensions of 127x12.7x6.4 mm.

### Thermal properties:

The VICAT B softening temperature (5kg in oil) was determined according to ASTM D1525/A, with a temperature increase of 120°C/hour.

### Rheological properties:

The Melt-Index (M.F.I.) was determined according to ASTM D1238, at 220°C and 10 kg.

### EXAMPLES 1-7

The following products are mixed in a Banbury-type mixer at a temperature of 180°C:
- an impact-resistant vinylaromatic copolymer (ABS) consisting of 18% by weight of polybutadiene rubber, 65% by weight of styrene and 17% by weight of acrylonitrile, in the quantities indicated in table 1;
- chloropolyethylene, produced and sold by DOW under the trade-name of Tyrin, in the quantities indicated in table 1;
- antimonium trioxide, produced and sold by Nuova Solmine under the trade-name of Stibital, in the quantities indicated in table 1;
- bis(tribromophenoxy)ethane, produced and sold by Great Lakes under the trade-name of Great Lakes FF-680, in the quantities indicated in table 1;
- polytetrafluoroethylene, produced and sold by E.I. Du Pont de Nemours and Company under the trade-name of Teflon, in the quantities indicated in table 1.

The mixture thus obtained, was ground in a Coumberland mill to obtain "grit".

For the determination of the characteristics, the "grit" is injection moulded at a temperature of 200-230°C in a GBF 111 press to obtain test samples having the dimensions required by the regulations.

The properties measured on the test samples thus obtained are shown in table 1.

### EXAMPLES 8-14

The same procedure is carried out as in examples 1-7, but using an impact-resistant arylpolyolefine homopolymer (HIPS) consisting of 93% of styrene and 7% of polybutadiene, produced and sold by EniChem under the trade-name of Edistir SRL 600, in the quantities indicated in table 2.

### EXAMPLES 15-20

The same procedure is carried out as in examples 3 and 5 (15 and 16), but using:
- tetrabromobisphenol A, produced and sold by Great Lakes under the trade-name of Great Lakes BA-59P, in the quantities indicated in table 3;
- decabromodiphenyl oxide, produced and sold by Great Lakes under the trade-name of Great Lakes DE-83R, in the quantities indicated in table 3.

### EXAMPLES 21-26

The same procedure is carried out as in examples 10 and 12 (21 and 22), but using:
- tetrabromobisphenol A, produced and sold by Great Lakes under the trade-name of Great Lakes BA-59P, in the quantities indicated in table 4;
- decabromodiphenyl oxide, produced and sold by Great Lakes under the trade-name of Great Lakes DE-83R, in the quantities indicated in table 4.

### EXAMPLES 27-34

The same procedure is carried out as in examples 3 and 5 (27 and 28) and examples 10 and 12 (33 and 34), but using:
- an arylolefinic homopolymer (PS) consisting of 100% by weight of styrene, produced and sold by EniChem under the trade-name of Edistir N 1280, in the quantities indicated in table 5;
- a vinylaromatic copolymer (SAN) consisting of 79% of styrene and 21% of acrylonitrile, produced and sold by EniChem under the trade-name of Kostil AF1/PA, in the quantities indicated in table 5.

### EXAMPLES 35-43

The same procedure is carried out as in examples 3 and 5 (35 and 36), but using:
- A tetrafluoroethylene/perfluoropropylene copolymer, produced and sold by E.I. Du Pont de Nemours under the trade-name of FEP, in the quantities indicated in table 6;
- a chlorofluoroethylene/ethylene copolymer, produced and sold by AUSIMONT under the trade-name of HALAR, in the quantities indicated in table 6;
- polyperfluoromethylvinylether, produced and sold by E.I. Du Pont di Nemours under the trade-name of PFA, in the quantities indicated in table 6;
- a vinylidenefluoride/hexafluoropropene/tetrafluoroethylene terpolymer (50/25/25), produced and sold by AUSIMONT under the trade-name of TECNOFLO-N, in the quantities indicated in table 6.

### EXAMPLES 44-45

The same procedure is carried out as in examples 3 and 5, evaluating the physico-mechanical-thermal characteristics, shown in table 7.

**Table 1**

| **Composition** | **Quantity** | **EXAMPLES** | | | | | | |
|---|---|---|---|---|---|---|---|---|
| | | **1** | **2** | **3** | **4** | **5** | **6** | **7** |
| **ABS** | % | 100 | 100 | 100 | 100 | 100 | 100 | 100 |
| **CPE** **(1)** | ppc | 5 | 5 | 5 | 5 | 5 | 5 | 5 |
| **Sb2O3** | " | 9 | 9 | 6 | 6 | 6 | 6 | 6 |
| **BTBPE** **(2)** | " | 27 | 20 | 20 | 20 | 20 | 20 | 20 |
| **PTFE** **(3)** | " | 0 | 0 | 0 | 0.2 | 0.5 | 1 | 3 |
| **Oxygen index** | | 31 | 25 | 23 | 25 | 29 | 29 | 29 |
| **UL 94 (1.6 mm)** | | V-0 | nc | nc | V-1 | V-0 | V-0 | V-0 |

| | | | | | | | | |
|---|---|---|---|---|---|---|---|---|
| (1) - Chloropolyethylene | | | | | | | | |
| (2) - Bis(tribromophenoxyethane) | | | | | | | | |
| (3) - Polytetrafluoroethylene | | | | | | | | |

**Table 2**

| **Composition** | **Quantity** | **EXAMPLES** | | | | | | |
|---|---|---|---|---|---|---|---|---|
| | | **8** | **9** | **10** | **11** | **12** | **13** | **14** |
| **HIPS** | % | 100 | 100 | 100 | 100 | 100 | 100 | 100 |
| **CPE** **(1)** | ppc | 5 | 5 | 5 | 5 | 5 | 5 | 5 |
| **Sb2O3** | " | 9 | 9 | 6 | 6 | 6 | 6 | 6 |
| **BTBPE** **(2)** | " | 27 | 20 | 20 | 20 | 20 | 20 | 20 |
| **PTFE** **(3)** | " | 0 | 0 | 0 | 0.2 | 0.5 | 1 | 3 |
| **Oxygen index** | | 33 | 27 | 22 | 24 | 29 | 30 | 31 |
| **UL 94 (1.6 mm)** | | V-0 | V-0 | nc | V-2 | V-0 | V-0 | V-0 |

| | | | | | | | | |
|---|---|---|---|---|---|---|---|---|
| (1) - Chloropolyethylene | | | | | | | | |
| (2) - Bis(tribromophenoxyethane) | | | | | | | | |
| (3) - Polytetrafluoroethylene | | | | | | | | |

**Table 3**

| **Composition** | **Quantity** | **EXAMPLES** | | | | | |
|---|---|---|---|---|---|---|---|
| | | **15** | **16** | **17** | **18** | **19** | **20** |
| **ABS** | % | 100 | 100 | 100 | 100 | 100 | 100 |
| **CPE** **(1)** | ppc | 5 | 5 | 5 | 5 | 5 | 5 |
| **Sb2O3** | " | 6 | 6 | 6 | 6 | 6 | 6 |
| **BTBPE** **(2)** | " | 20 | 20 | | | | |
| **TBBPA** **(4)** | " | | | 20 | 20 | | |
| **DBDPO** **(5)** | " | | | | | 20 | 20 |
| **PTFE** **(3)** | " | 0 | 0.5 | 0 | 0.5 | 0 | 0.5 |
| **Oxygen index** | | 22 | 29 | 26 | 36 | 31 | 41 |
| **UL 94 (1.6 mm)** | | nc | V-0 | nc | V-0 | V-1 | V-0 |

| | | | | | | | |
|---|---|---|---|---|---|---|---|
| (1) - Chloropolyethylene | | | | | | | |
| (2) - Bis(tribromophenoxyethane) | | | | | | | |
| (3) - Polytetrafluoroethylene | | | | | | | |
| (4) - Tetrabromobisphenol A | | | | | | | |
| (5) - Decabromodiphenyl oxide | | | | | | | |

**Table 4**

| **Composition** | **Quantity** | **EXAMPLES** | | | | | |
|---|---|---|---|---|---|---|---|
| | | **21** | **22** | **23** | **24** | **25** | **26** |
| **HIPS** | % | 100 | 100 | 100 | 100 | 100 | 100 |
| **CPE** **(1)** | ppc | 5 | 5 | 5 | 5 | 5 | 5 |
| **Sb2O3** | " | 6 | 6 | 6 | 6 | 6 | 6 |
| **BTBPE** **(2)** | " | 20 | 20 | | | | |
| **TBBPA** **(4)** | " | | | 20 | 20 | | |
| **DBDPO** **(5)** | " | | | | | 20 | 20 |
| **PTFE** **(3)** | " | 0 | 0.5 | 0 | 0.5 | 0 | 0.5 |
| **Oxygen index** | | 23 | 29 | 27 | 37 | 30 | 39 |
| **UL 94 (1.6 mm)** | | nc | V-0 | V-2 | V-0 | V-2 | V-0 |

| | | | | | | | |
|---|---|---|---|---|---|---|---|
| (1) - Chloropolyethylene | | | | | | | |
| (2) - Bis(tribromophenoxyethane) | | | | | | | |
| (3) - Polytetrafluoroethylene | | | | | | | |
| (4) - Tetrabromobisphenol A | | | | | | | |
| (5) - Decabromodiphenyl oxide | | | | | | | |

**Table 5**

| **Composition** | **Quantity** | **EXAMPLES** | | | | | | | |
|---|---|---|---|---|---|---|---|---|---|
| | | **27** | **28** | **29** | **30** | **31** | **32** | **33** | **34** |
| **ABS** | % | 100 | 100 | | | | | | |
| **San** | % | | | 100 | 100 | | | | |
| **PS** | % | | | | | 100 | 100 | | |
| **HIPS** | % | | | | | | | 100 | 100 |
| **CPE** **(1)** | ppc | 5 | 5 | 5 | 5 | 5 | 5 | 5 | 5 |
| **Sb2O3** | " | 6 | 6 | 6 | 6 | 6 | 6 | 6 | 6 |
| **BTBPE** **(2)** | **"** | 20 | 20 | 20 | 20 | 20 | 20 | 20 | 20 |
| **PTFE** **(3)** | **"** | 0 | 0.5 | 0 | 0.5 | 0 | 0.5 | 0 | 0.5 |
| **Oxygen index** | | 22 | 29 | 27 | 30 | 25 | 32 | 23 | 29 |
| **UL 94 (1.6 mm)** | | nc | V-0 | V-2 | V-0 | nc | V-0 | nc | V-0 |

| | | | | | | | | | |
|---|---|---|---|---|---|---|---|---|---|
| (1) - Chloropolyethylene | | | | | | | | | |
| (2) - Bis(tribromophenoxyethane) | | | | | | | | | |
| (3) - Polytetrafluoroethylene | | | | | | | | | |

**Table 6**

| **Composition** | **Quantity** | **EXAMPLES** | | | | | | | | |
|---|---|---|---|---|---|---|---|---|---|---|
| | | **35** | **36** | **37** | **38** | **39** | **40** | **41** | **42** | **43** |
| **ABS** | % | 100 | 100 | 100 | 100 | 100 | 100 | 100 | 100 | 100 |
| **CPE** **(1)** | ppc | 5 | 5 | 5 | 5 | 5 | 5 | 5 | 5 | 5 |
| **Sb2O3** | " | 6 | 6 | 6 | 6 | 6 | 6 | 6 | 6 | 6 |
| **BTBPE** **(2)** | **"** | 20 | 20 | 20 | 20 | 20 | 20 | 20 | 20 | 20 |
| **PTFE** **(4)** | **"** | 0 | 0.5 | | | | | | | |
| **TFE/PFP Copolymer** **(3)** | " | | | 1 | 3 | | | | | |
| **PFAVE** **(6)** | " | | | | | 1 | 3 | | | |
| **TFCB** **(5)** | " | | | | | | | 1 | 3 | |
| **Blend VDF/HFP/TFE** **(7)** | " | | | | | | | | | 5 |
| **Oxygen index** | | 23 | 29 | 26 | 28 | 27.5 | 29 | 27 | 28.5 | 26.5 |
| **UL 94 (1.6 mm)** | | nc | V-0 | V-1 | V-0 | V-1 | V-1 | V-1 | V-0 | V-1 |

| | | | | | | | | | | |
|---|---|---|---|---|---|---|---|---|---|---|
| (1) - Chloropolyethylene | | | | | | | | | | |
| (2) - Bis(tribromophenoxyethane) | | | | | | | | | | |
| (3) - Tetrafluoroethylene/Perfluoropropylene copolymer | | | | | | | | | | |
| (4) - Polytetrafluoroethylene | | | | | | | | | | |
| (5) - Fluorochloroethylene/ethylene copolymer | | | | | | | | | | |
| (6) - Perfluoroalkylvinylether | | | | | | | | | | |
| (7) - Blend vinylidene fluoride/exafluoropropene/tetrefluoroethylene | | | | | | | | | | |

**Table 7**

| **Comsosition** | **Quantity** | **Examples** | |
|---|---|---|---|
| | | **44** | **45** |
| **ABS** | % | 100 | 100 |
| **CPE** **(1)** | ppc | 5 | 5 |
| **Sb2O3** | " | 9 | 6 |
| **BTBPE** **(2)** | " | 27 | 20 |
| **PTFE** **(3)** | " | 0 | 0.5 |
| **Property** | **Unit** | | |
| **Density** | g/cc | 1.23 | 1.18 |
| **MI (220°C-10kg)** | g/10' | 23 | 21 |
| **RCI 1/4" 23°C PI** | J/m | 95 | 110 |
| **RCI 1/8" 23°C PI** | " | 128 | 140 |
| **MEF** | MPa | 2130 | 2200 |
| **Vicat (5kg-120°C/h)** | °C | 85 | 87.5 |
| **Oxygen index** | % | 31 | 29 |
| **UL 94 (1.6mm)** | | V-0 | V-0 |

| | | | |
|---|---|---|---|
| (1) - Chloropolyethylene | | | |
| (2) - Bis(tribromophenoxyethane) | | | |
| (3) - Polytetrafluoroethylene | | | |

## Claims

1. Self-extinguishing polymeric compositions comprising:
a) at least one vinylaromatic (co)polymer;
b) from 0.1 to 5 parts by weight, with respect to 100 parts of component (a), of a fluorinated or perfluorinated polyolefin;
c) from 2 to 15 parts by weight, with respect to 100 parts of component (a), of at least one antimonium oxide;
d) from 6 to 30 parts by weight, with respect to 100 parts of component (a), of a halogenated flame-retardant additive having general formula (I): 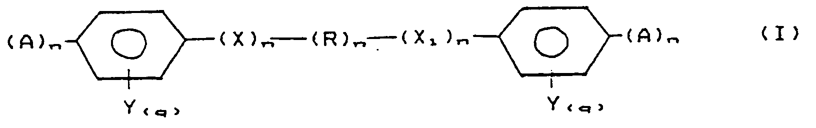 wherein R represents a C₁-C₆ alkylenic or cycloalkylenic radical or C₆-C₁₂ arylenic radical; X and X₁, the same or different, represent a C₁-C₄ alkylenic radical; C₆-C₁₂ arylenic radical, -O-, -S- or -NH-; A represents an -OH group, a C₁-C₄ alkylic or alkoxylic group possibly substituted with halogens; Y is a halogen such as bromine; n is zero or 1; q is an integer between 1 and 5; possibly mixed with a chlorinated polyolefin.

2. Compositions according to claim 1, wherein the fluorinated or perfluorinated polyolefin used in the compositions of the present invention basically consists of polytetrafluoroethylene, the copolymer tetrafluoroethylene/perfluoropropylene, polyperfluoroalkyl-vinylethers, the copolymer trifluorochloroethylene/ethylene, the terpolymer vinylidenefluoride (50% by weight), hexafluoropropene (25%), tetrafluoroethylene (25%).

3. Compositions according to claim 1 or 2, wherein the antimonium oxides are antimonium trioxide and antimonium sesquioxide.

4. Compositions according to any of the previous claims, wherein the chlorinated polyolefin is chloropolyethylene containing about 35% by weight of chlorine.

5. Compositions according to any of the previous claims, wherein the content of chlorinated polyolefin is less than 30% by weight with respect to the sum of the two halogenated additives.
